Europäisches Patentamt

European Patent Office

Office européen des brevets

(11) Veröffentlichungsnummer: **0 316 637**
**B1**

(12) **EUROPÄISCHE PATENTSCHRIFT**

(45) Veröffentlichungstag der Patentschrift:
28.11.90

(21) Anmeldenummer: 88117958.4

(22) Anmeldetag: 28.10.88

(51) Int. Cl.⁵: **F01N 3/28, F01N 7/16, F01N 7/14**

(54) **Gehäuse einer Abgasreinigungsvorrichtung.**

(30) Priorität: **13.11.87 DE 3738660**

(43) Veröffentlichungstag der Anmeldung:
**24.05.89 Patentblatt 89/21**

(45) Bekanntmachung des Hinweises auf die Patenterteilung:
**28.11.90 Patentblatt 90/48**

(84) Benannte Vertragsstaaten:
**DE FR GB IT SE**

(56) Entgegenhaltungen:
**EP-A- 0 127 550**
**EP-A- 0 158 625**
**EP-A- 0 233 860**
**DE-A- 1 910 110**
**DE-A- 2 364 425**
**DE-A- 3 402 916**
**DE-A- 3 590 790**
**FR-A- 1 304 225**
**GB-A- 2 047 559**
**GB-A- 2 058 918**
**GB-A- 2 129 490**

(73) Patentinhaber: **Bayerische Motoren Werke
Aktiengesellschaft, Patentabteilung
AJ-30 Postfach 40 02 40 Petuelring 130,
D-8000 München 40(DE)**

(72) Erfinder: **Ahme, Max, Straussstrasse 8,
D-8901 Gablingen(DE)**
Erfinder: **Brich, Jürgen, Schillstrasse 174 a,
D-8900 Augsburg(DE)**

ACTORUM AG

## Beschreibung

Die Erfindung bezieht sich auf eine Abgasreinigungsvorrichtung mit wärmedämmend ausgebildeten Gehäusewänden, wie sie beispielsweise in Form eines Abgaskatalysators an Brennkraftmaschinen zum Einsatz kommt und in der DE-OS 3 509 790 gezeigt ist.

Derartige Abgasreinigungsvorrichtungen wandeln die schädlichen Bestandteile des Abgases in unschädliche Abgaskomponenten um. Da für diesen Umwandlungsprozeß entweder Energiezufuhr in Form hoher Temperaturen erforderlich ist oder während des Umwandlungsprozesses das Abgas auf einem relativ hohen Temperaturniveau gehalten wird, sind die Gehäuse sowohl von thermischen Reaktoren als auch von Abgaskatalysatoren mit wärmedämmend ausgebildeten Wänden versehen, um sowohl die Energieverluste gering zu halten, als auch die direkte Umgebung der Abgasreinigungsvorrichtung vor unzulässig hoher Temperatureinwirkung zu schützen.

Hinsichtlich der Wärmedämmung hat sich jene bekannte Gehäuseausbildung bewährt; im Hinblick auf eine ebenfalls erforderliche Schalldämmung zur Reduzierung der durch die strömenden Abgase verursachten Schallemissionen konnten die damit erzielbaren Ergebnisse jedoch nicht befriedigen.

Aufgabe der Erfindung ist es daher, ein Gehäuse einer Abgasreinigungsvorrichtung der im Oberbegriff des ersten Anspruchs angegebenen Art hinsichtlich seiner Schallemissionen zu verbessern.

Diese Aufgabe wird durch die kennzeichnenden Merkmale des ersten Anspruchs gelöst.

Ein das Gehäuse umhüllender, schalldämmend ausgebildeter Mantel reduziert die vom Gehäuse abgestrahlten Schallemissionen besonders wirkungsvoll dann, wenn zwischen dem Gehäuse sowie dem Mantel ein Luftspalt vorgesehen ist. Jener Luftspalt erfüllt dabei zwei Aufgaben: Zum einen trennt er den Mantel schallmässig vom Gehäuse, es ist somit also keine bedeutsame Schallbrücke vorhanden. Zum zweiten schützt jener Spalt den schalldämmend ausgebildeten Mantel vorteilhafterweise vor unzulässig hohem Temperatureinfluß, ausgehend von den zumeist extrem heissen Gehäusewänden. Der schalldämmend ausgebildete Mantel wird vorrangig von Strahlungswärme beaufschlagt, da keine nennenswerte direkte Wärmeleitbrücke vorhanden ist.

Bei der Ausbildung des schalldämmenden Mantels lassen sich durch die Verwendung von Synthetikfasern mit Füllstoff zum einen gute Schalldämmwerte erzielen, zum anderen zeigen derartige Materialien oftmals eine hohe Temperaturresistenz. Angeordnet auf einer Tragplatte vermögen jene Fasern zusammen mit dem Füllstoff eventuell schallerzeugende Schwingungen jener Tragplatte zu vermeiden. Die Tragplatte verleiht dabei dem Mantel die erforderliche Festigkeit.

Zwar ist aus der EP-A 0 233 860 eine Abgasreinigungseinrichtung mit einem weiteren wärmedämmend ausgebildeten Mantel bekannt. Dieser weitere Mantel liegt jedoch direkt an der wärmedämmend ausgebildeten Gehäusewand an.

Zwei vorteilhafte Möglichkeiten, den Mantel mit dem Gehäuse zu verbinden, sind in den Ansprüchen 2 und 3 genannt. Sowohl die umlaufende Trennfuge als auch der Zu- und Abfuhrstutzen liegen zumeist abseits des mit maximalen Temperaturen beaufschlagten Bereiches der Abgasreinigungsvorrichtung. Somit kann in jenen Bereichen der Mantel direkt an das Gehäuse angebunden werden. Geschieht dies – eventuell unter Zwischenlage einer weiteren Dämmschicht – mittels eines versteifenden Bördels, so verändert die damit gebildete geringfügige Schallbrücke die mit der vorliegenden Erfindung erzielbaren Schalldämm-Ergebnisse in kaum meßbarer Weise.

Im folgenden wird die Erfindung anhand eines bevorzugten Ausführungsbeispiels näher beschrieben. Dargestellt ist ein Teil einer Halbschale eines Abgaskatalysators mit einem umhüllenden, schalldämmend ausgebildeten Mantel im Schnitt.

Eine in ihrer Gesamtheit mit 1 bezeichnete Abgasreinigungsvorrichtung besteht aus einem monolithischen Keramikträger 2, welcher mit katalytischem Material beschichtet ist. Die zu reinigenden Abgase durchströmen den Keramikträger 2 in Pfeilrichtung 3 und verlassen die Abgasreinigungsvorrichtung 1 über einen Abfuhrstutzen 4. Jener Abfuhrstutzen 4 ist aus dem Gehäuse 5 heraus gearbeitet, welches den Keramikträger 2 unter Zwischenlage einer Quellmatte 6 im wesentlichen umhüllt und – aufgrund der thermischen Eigenschaften jener Quellmatte 6 – wärmedämmende Eigenschaften aufweist. Anstelle einer derartigen Quellmatte 6 kann in jenem Bereich aber auch das oftmals verwendete Drahtgestrick in Verbindung mit einer Wärmedämmmatte vorgesehen sein, auch auf jene bekannte Ausführungsform der Drahtgestricklagerung ist die vorliegende Erfindung, unter Bildung eines Spaltes einen schalldämmend ausgebildeten Mantel vorzusehen, anwendbar.

Um die durch die strömenden Abgase hervorgerufene Schallemission an jener Abgasreinigungsvorrichtung 1 herabzusetzen, ist das Gehäuse 5 von einem schalldämmend ausgebildeten Mantel 7 umhüllt. Zwischen dem Mantel 7 sowie dem Gehäuse 5 ist ein Luftspalt 8 vorgesehen. Wie bereits beschrieben dient jener Luftspalt 8 zur thermischen Isolation des Mantels 7 gegenüber dem Gehäuse 5 und vermeidet zugleich eine mögliche direkte Schallübertragung.

Der Mantel 7 ist aufgebaut aus zwei Stahlblech-Tragplatten 9, zwischen denen das schalldämmende Material 10 in Form von Synthetikfasern und Füllstoff eingegossen ist. Im Endbereich des Abfuhrstutzens 4 ist der Mantel 7 mit dem Gehäuse 5 durch Bildung eines Bördels 11 – eventuell unter Zwischenlage einer Dämmschicht – verbunden. Jene minimale Schallbrücke ist jedoch nicht geeignet, die vorteilhaften Ergebnisse, welche mit einem erfindungsgemäßen Abgasreinigungsvorrichtungs-Gehäuse erzielt wurden, meßbar zu verändern. Eminent ist vielmehr die Schalldämmung, welche sich erzielen läßt, indem das Gehäuse einer Abgasreinigungsvorrichtung unter Bildung eines Spaltes von einem schalldämmend ausgebildeten Mantel umhüllt ist.

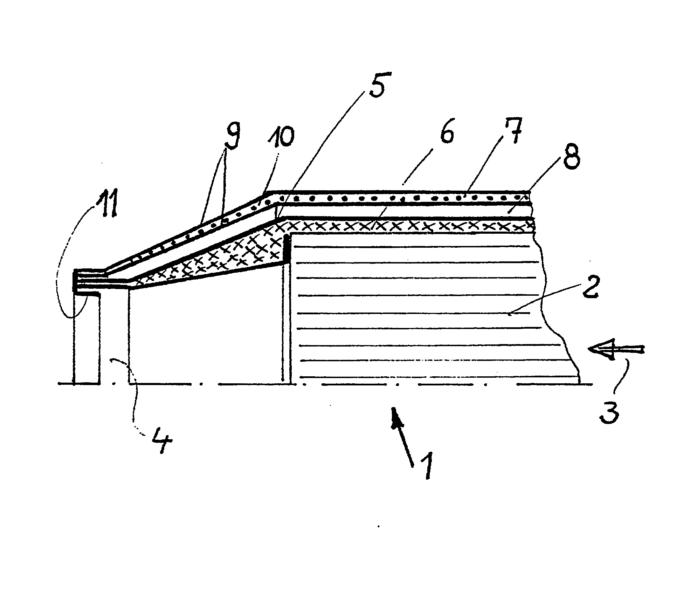

**Patentansprüche**

1. Gehäuse einer Abgasreinigungsvorrichtung (1), insbesondere für Brennkraftmaschinen, mit einer wärmedämmend ausgebildeten Gehäusewand (5, 6), gekennzeichnet durch einen, das Gehäuse (5) unter Bildung eines Luftspaltes (8) umhüllenden, schalldämmend ausgebildeten Mantel (7), der aus einer mit Synthetikfasern und Füllstoff versehenen Tragplatte (9) aufgebaut ist.

2. Aus zwei eine umlaufende Trennfuge bildenden Halbschalen aufgebautes Gehäuse nach Anspruch 1 dadurch gekennzeichnet, daß der Mantel (7) mit dem Gehäuse (5) in der Trennfuge verbunden ist.

3. Gehäuse mit Abgaszu- und Abfuhrstutzen (4) nach einem der vorangegangenen Ansprüche, dadurch gekennzeichnet, daß der Mantel (7) mit dem Gehäuse (5) am Zu- und Abfuhrstutzen (4) verbunden ist.

**Revendications**

1. Boîtier pour dispositif d'épuration de gaz d'échappement (1) notamment pour des moteurs à combustion interne, comportant une paroi de boîtier (5, 6) à caractéristique d'isolation thermique, boîtier caractérisé en ce que le boîtier (5) est entouré d'une enveloppe (7) à caractéristique d'isolation phonique, laissant un intervalle d'air (8), cette enveloppe étant constituée par une plaque de support (9) munie de fibres synthétiques et d'une matière de remplissage.

2. Boîtier selon la revendication 1 formé de deux demi-coquilles constituant un joint périphérique, caractérisé en ce que l'enveloppe (7) est reliée au boîtier (5) au niveau du joint.

3. Boîtier selon l'une des revendications précédentes comportant un ajutage d'arrivée de gaz d'échappement et une sortie de gaz d'échappement (4), caractérisé en ce que l'enveloppe (7) est reliée au boîtier (5) au niveau des ajutages d'arrivée et de sortie (4).

**Claims**

1. A casing of an exhaust-gas cleaning device (1), more particularly for internal combustion engines, comprising a heat-insulating casing wall (5, 6), characterised by a sound-insulating jacket (7) which surrounds the casing (5) and forms an air gap (8) and is made up of a supporting plate (9) provided with synthetic fibres and a filler.

2. A casing according to claim 1, made up of two halfshells forming a peripheral parting line, characterised in that the jacket (7) is connected to the casing (5) at the parting line.

3. A casing with an exhaust-gas supply and discharge nozzle (4) according to either of the preceding claims, characterised in that the jacket (7) is connected to the casing (5) at the supply and discharge nozzle (4).